# EUROPEAN PATENT SPECIFICATION

(11) **EP 0 355 004 B1**
(45) Date of publication and mention of the grant of the patent: **27.10.1993**
(21) Application number: 89114333.1
(22) Date of filing: 03.08.1989
(51) Int. Cl.: G21C 7/117

(54) **Reconstitutable control assembly having removable control rods**
Wiederzusammenbaubare Regelstabeinheit mit entfernbaren Regelstäben
Grappe de commande reconstituable ayant des barreaux de commande amovibles

(30) Priority: 17.08.1988 US 232970; 15.12.1988 US 284566
(43) Date of publication of application: 21.02.1990
(73) Proprietor: WESTINGHOUSE ELECTRIC CORPORATION, Pittsburgh Pennsylvania 15222 (US)
(72) Inventor: Sparrow, James Alan, Columbia South Carolina 29212 (US); Gjertsen, Robert Kenneth, Columbia South Carolina 29212 (US); Knott, Ronald Paul, Columbia South Carolina 29212 (US)
(74) Representative: Gallo, Wolfgang, Dipl.-Ing. (FH)

(56) References cited:
- GB-A- 2 077 989
- US-A- 3 930 938
- US-A- 4 381 283

## Description

The present invention relates generally to nuclear reactors and, more particularly, to a reconstitutable control rod spider assembly.

The reactor core of a typical nuclear reactor, such as a pressurized water type, includes a multiplicity of fuel assemblies each of which is composed of top and bottom nozzles, elongate transversely spaced guide thimbles extending longitudinally between and attached at opposite ends to the nozzles, transverse support grids axially spaced along and attached to the guide thimbles, and a plurality of elongate fuel elements or rods transversely spaced from one another and from the guide thimbles and supported by the transverse grids between the top and bottom nozzles. The fuel rods contain fissile material and are grouped together in an array which is organized to provide sufficient neutron flux in the core to support a high rate of nuclear fission and, thus, the release of a large amount of energy in the form of heat. During reactor operation, a liquid coolant is pumped upwardly through the core in order to extract some of the heat generated therein for the production of useful work.

Since the rate of heat generation in the reactor core is proportional to the nuclear fission rate and this, in turn, is determined by the neutron flux in the core, control of heat generation at start-up, during operation and at shutdown of the reactor is achieved by varying the neutron flux. Generally, this is done by absorbing excess neutrons through use of control rods containing neutron absorbing material. The guide thimbles, in addition to being structural elements of the fuel assembly, also serve as channels for the insertion of the control rods into the reactor core. The level of neutron flux, and thus the heat output of the core, are normally regulated through movement of the control rods into and from the guide thimbles.

One common arrangement utilizing control rods in conjunction with a fuel assembly is shown in U.S. Patent No. 4,326,919 disclosing a control rod spider assembly which includes a spider structure and a plurality of control rods supported therefrom. The spider structure is connected to a control drive mechanism for lowering and raising (known as a stepping action) the control rods into and from, respectively, the hollow guide thimbles of the fuel assembly. Typically, a control rod of the kind used in such arrangement consists of an elongate metallic cladding tube containing neutron absorbing material and sealed at its opposite ends by means of end plugs.

The spider structure typically comprises a central hub and vanes spaced circumferentially thereabout and extending radially therefrom. The vanes are flat metal plates positioned on edge and connected at their inner ends to the central hub, and they have hollow cylindrical control-rod connecting fingers disposed thereon. Typically, the upper end plug of each control rod has a threaded outer end which is insertable into a bore in a lower portion of one of the fingers of the spider structure, and is threadedly engageable in a tapped hole formed within the finger at the inner end of the bore. The end plug thus threaded into the tapped hole is secured or locked in place by means of a key or pin inserted into openings in the side of the finger and of the end plug, and welded therein. This kind of control rod spider assembly is not reconstitutable, that is to say, it cannot readily be taken apart to allow worn or damaged components to be replaced; instead, the whole assembly must be discarded.

In many older nuclear reactor plants, the control rods are approaching the end of their design life. Furthermore, in several newer plants with modified reactor internals, the control rods are experiencing accelerated wear. In most cases, wear occurs over local areas on the cladding of some, but not all, control rods of a given control rod spider assembly, and is believed to be caused by coolant flow-induced vibration. The severity of clad wear depends upon the type of nuclear plant and internals design, and typically occurs only on a limited number of control rods of a given assembly. Consequently, there is a growing interest in, and need for, reconstitutable control rod spider assemblies wherein selected individual control rods that are prematurely worn or damaged can be removed and replaced.

A spider assembly which allows a control rod to be removed from a spider structure by severing or cutting off its threadedly engaged top end together with the fastener engaged therewith is disclosed in EP-A-249 544. In U.S. Patent No. 4,711,756 there is disclosed another spider assembly which seems to allow removal of a control rod from a spider by removing a set screw and then unthreading the upper end plug of the control rod from a support rod mounted on a spider vane finger. And U.S. patents No. 4,314,885 and No. 4,381,283 disclose spider assemblies which allow a control rod to be removed from a spider structure by destructively deforming a locking element employed to secure the top end of the control rod to the spider structure.

It is the principal object of the invention to provide an improved attachment joint which will enable a control rod to be fastened to, and later to be removed from, a spider or similar support structure relatively easily and quickly, and without cutting or destructive deformation.

The invention accordingly resides in a control assembly for use with a nuclear fuel assembly, including a support structure, at least one control rod, and an attachment joint detachably fastening the control rod to a connecting portion of the support structure, characterized in that said attachment joint comprises an elongated control-rod end plug comprising two separate plug portions one of which is firmly affixed to said connecting portion of the support structure, and the other of which is firmly affixed to the control rod, said separate plug portions being separably joined to each other and including retaining means for resisting relative separating movement of the two plug portions with respect to one another, said retaining means being defeatable through application, to the control rod or said other plug portion affixed thereto, of a force sufficient to overcome the resistance of the retaining means.

Preferably, the two plug portions, each of them a unitary member, are screwed together, said one plug portion having a lower section with external threads formed thereon, and said other plug portion having a middle segment with internal threads formed therein, said lower section of said one plug portion extending into and being threadedly engaged in said middle segment of said other plug portion. Also preferably, said one plug portion has formed exteriorly thereon an annular shoulder, and said other plug portion has formed interiorly thereon an annular ledge, said annular shoulder and ledge being bottomed out upon each other in preloaded relation when the two plug portions are completely joined.

In one embodiment of the invention, the retaining means for resisting separation of the plug portions comprises complementary interlocking means in the form of flats formed exteriorly, and at circumferentially spaced locations, on a middle section of said one plug portion, and a hollow and relatively thin-walled sleeve defined on an upper segment of said other plug portion and fit over, and deformed into gripping engagement with, the flats on said one plug portion the flats formed on the respective plug portions. In an alternative arrangement, the retaining means comprises a radially flexible and expandable thread-defining means, preferably a screw-thread coil insert, which is interposed between, and in threaded frictional engagement with, the aforesaid external and internal threads provided on and in, respectively, said one and said other plug portion. With this arrangement, the middle section of said one plug portion and the upper segment of said other plug portion, which in the first-mentioned embodiment include respectively the flats and the thin-walled sleeve, are cylindrical instead and they coact to form a slip-fit type joint.

With either arrangement, the retaining means will prevent the two plug portions from loosening during reactor operation, and are defeatable simply by applying, to the control rod or said other plug portion affixed thereto, enough torque to cause the thin-walled sleeve of the first-mentioned arrangement to yield and to resume its initial non-deformed and non-gripping shape or, with regard to the alternative arrangement, to overcome the frictional resistance offered to unthreading rotation by the radially flexible and expandable thread-defining means.

The control rod, once removed, can be reattached or, if desired, can be replaced with another control rod having affixed thereto a plug portion such as said other plug portion mentioned above, simply by reconnecting its or the replacement rod's plug portion to said one plug portion still affixed to the support structure, and, if the retaining means is of the first-mentioned kind, by deforming, such as crimping or swaging, the thin-walled sleeve into gripping engagement with the flats on said one plug portion. Of course, no such deforming step is required if the retaining means is of the radially flexible and expandable thread-defining kind since the latter will become automatically effective to prevent loosening of the joined plug portions.

Preferred embodiments of the invention will now be described, by way of example only, with reference to the accompanying drawings, in which:
Figure 1 is a side elevational view, with parts partially sectioned and broken away for purposes of clarity, of a conventional fuel assembly;
Figure 2 is a top plan view of a conventional control rod spider assembly such as previously used in the kind of fuel assembly shown in Figure 1;
Figure 3 is an elevational view, with parts partially sectioned, of the spider assembly of Figure 2, as seen along line 3-3;
Figure 4 is an enlarged fragmentary view, with parts partially sectioned and broken away, of the spider structure of the assembly shown in Figure 3;
Figure 5 is a cross-sectional fragmentary view of a vane and control rod connecting finger of the spider structure of Figure 4, as taken along line 5-5;
Figure 6 is a cross-sectional view of the connecting finger as taken along line 6-6 of Figure 4;
Figure 7 is an enlarged fragmentary view of a control rod with a conventional upper end plug, such as employed with the spider assembly of Figure 3;
Figure 8 is an enlarged fragmentary view, with parts partially sectioned and broken away, which shows the control rod of Figure 7 connected to the spider structure of Figure 4 in a conventional manner;
Figure 9 is a cross-sectional view as taken along line 9-9 of Figure 8;
Figure 10 is a view similar to Figure 8 but illustrating a control rod with an upper end plug embodying the invention;
Figure 11 is an exploded view, on a slightly smaller scale, of the end plug shown in Figure 10;
Figure 12 is an enlarged bottom plan view of an upper plug portion of the end plug, as seen along line 12-12 of Figure 11;
Figure 13 is an enlarged top plan view of a lower plug portion of the end plug, as seen along line 13-13 of Figure 11;
Figure 14 is an enlarged fragmentary side elevational view of the upper plug portion of the end plug shown in Figure 11;
Figure 15 is an enlarged fragmentary longitudinal sectional view of the lower plug portion of the end plug shown in Figure 11;
Figure 16 is an enlarged fragmentary side elevational view, partly in longitudinal section, illustrating the upper and lower plug portions connected together;
Figure 17 is a view similar to Figure 10 but illustrating a modification of the upper end plug embodying the invention;
Figure 18 is a view, similar to Figure 11, of the modified end plug;
Figure 19 is a view similar to Figure 14 but illustrating the upper plug portion of the modified end plug;
Figure 20 is a view similar to Figure 15 but illustrating the lower plug portion of the modified end plug;
Figure 21 is a view similar to Figure 16 but illustrating the upper and lower plug portions of the modified end plug connected together;
Figure 22 is an enlarged side elevational view of a radially flexible and expandable thread-defining member incorporated in the modified end plug of Figure 21; and
Figure 23 is a fragmentary plan view taken along line 23-23 of Figure 22.

In the following description, like reference characters designate like or corresponding parts throughout the several views, and terms such as "forward", "rearward", "left", "right", "upwardly", "downwardly", and the like are used as words of convenience not to be construed as limiting terms.

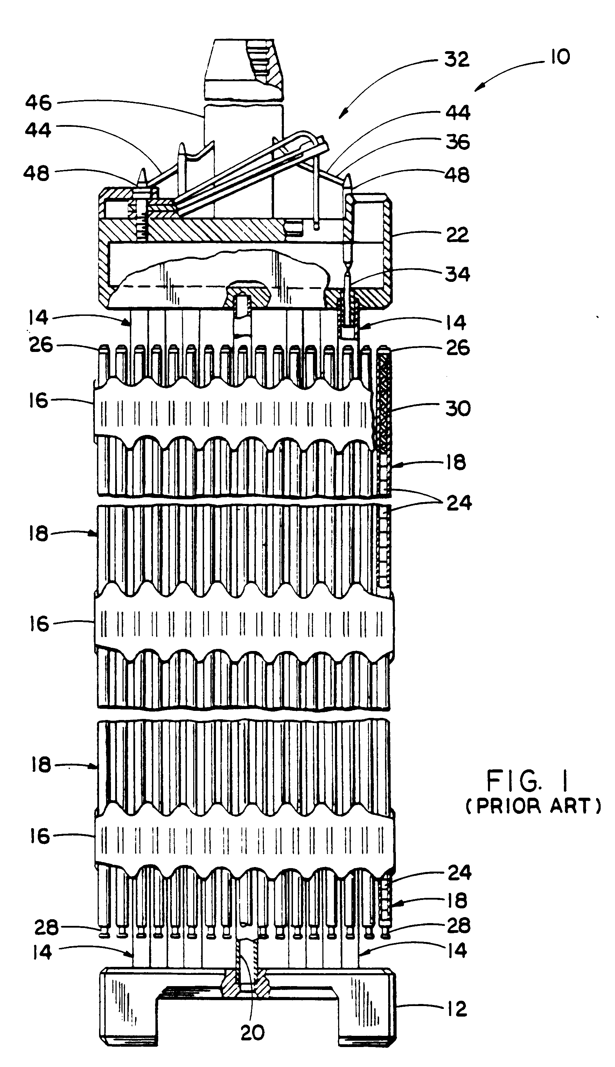

Referring now to the drawings, and particularly to Figure 1, the fuel assembly illustrated therein in vertically foreshortened form and generally designated with reference numeral 10 is as commonly used in pressurized water reactors (PWR). Basically, it comprises a lower end structure or bottom nozzle 12 for supporting the assembly on the lower core plate (not shown) in the core region of a reactor (not shown), longitudinally extending guide tubes or thimbles 14 projecting upward from the bottom nozzle 12, transverse grids 16 axially spaced along the guide thimbles 14, an organized array of elongate fuel rods 18 supported by the grids 16 in transversely spaced relationship with respect to each other, an instrumentation tube 20 located in the center of the fuel assembly, and an upper end structure or top nozzle 22 removably attached to upper end portions of the guide thimbles 14 to form an integral assembly capable of being conveniently handled without damage thereto. Each fuel rod 18 contains fuel pellets 24 made of fissile material, and has its opposite ends hermetically sealed by means of upper and lower end plugs 26, 28. Usually, a plenum spring 30 is disposed between the upper end plug 26 and the pellets 24 in order to maintain the pellets firmly stacked.

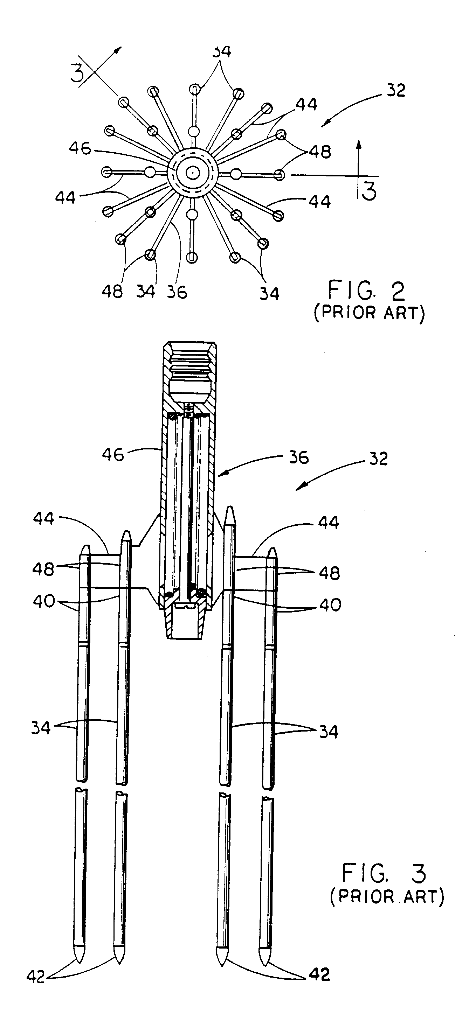

Turning now to Figures 2 and 3, the conventional control rod spider assembly shown therein and generally designated 32 comprises a spider structure 36 and control rods 34 supported therefrom in a pattern matching that of the guide thimbles 14 and enabling the control rods to be inserted through the top nozzle 22 (Figure 1) and down into the guide thimbles 14 of the PWR fuel assembly 10. The spider structure 36 is connected to a control mechanism (not shown) which is operable in a known manner to move the control rods 34 so as to regulate core power.

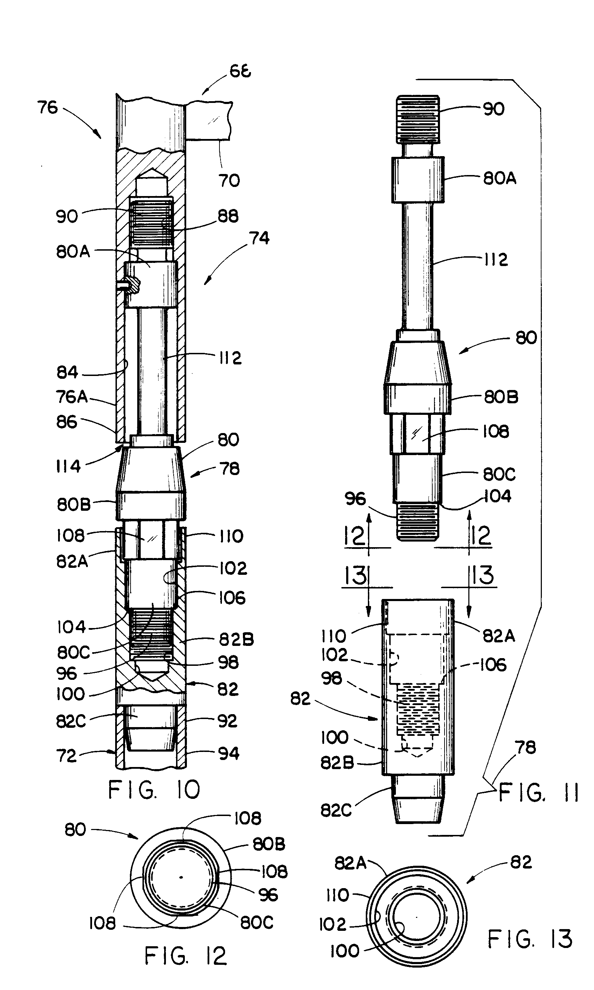

Each control rod 34 of the spider assembly 32 comprises an elongate metallic cladding tube 38 (see Figures 7-8) containing a neutron absorbing material and sealed at its opposite ends by means of end plugs 40, 42. The spider structure 36 comprises a central hub 46, and flutes or vanes 44 spaced circumferentially about the hub and radially extending therefrom. Some of the vanes 44 have thereon one control-rod connecting finger 48 each, and others are each provided with two such connecting fingers 48 spaced from each other.

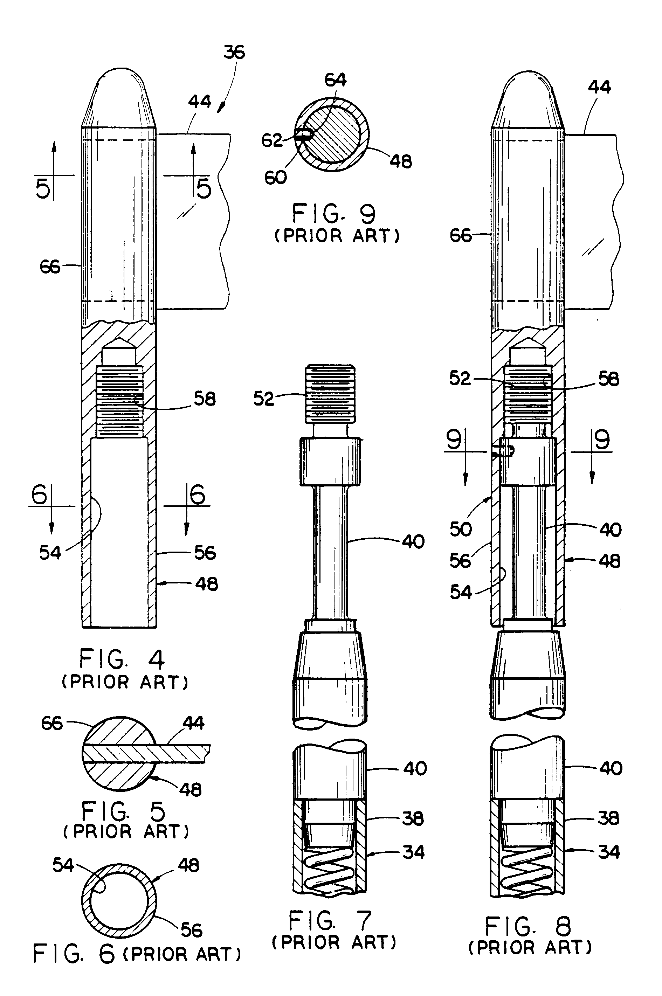

Referring to Figures 4-9, there is illustrated a conventional attachment joint, generally designated 50, such as formed between each control rod 34 of the conventional spider assembly 32 and the associated connecting finger 48 on the vane 44 supporting it. The upper end plug 40 of the control rod 34 has a threaded outer end portion 52 (Figure 7), and the connecting finger 48, which is secured to the vane 44 by means of a bayonet-type weld connection, has an axial bore 54 (Figure 4) formed in a lower portion 56 thereof, and a smaller-diameter threaded hole 58 tapped therein at the inner end of the bore 54. The threaded outer or upper end portion 52 of the upper end plug 40 is threadedly engaged in the tapped hole 58 when the plug 40 is received within the axial bore 54, as seen from Figure 8. The end plug 40 is securely locked in position by means of a key or pin 60 (Figure 9) inserted through aligned holes 62, 64 in the sides of the finger 48 and end plug 40 and welded thereto. Parenthetically, it should be noted that the tapped hole 58 terminates where the finger portion 66 which is connected to the vane 44 begins.

A major disadvantage of this conventional control-rod spider assembly 32 is that it is not reconstitutable, i.e., it cannot be readily taken apart in order to have worn or damaged components replaced but must be discarded as a whole if such need arises.

However, as mentioned earlier herein, some known control-rod spider assemblies are reconstitutable in that control rods thereon can be removed, one such spider assembly being disclosed in the above-mentioned FR-A-2 599 884. This known control-rod spider assembly, too, includes a spider structure with connecting fingers, and the control rods connected thereto likewise have upper end plugs with threaded outer ends. However, the attachment joint employed to secure each control rod to the associated connecting finger differs from the one described above in that each connecting finger of the spider assembly according to FR-A-2 599 884 has an axial bore extending completely therethrough, and the upper end plug of the control rod extends completed through the axial bore and projects therefrom, its threaded outer end portion being threadedly engaged in an elongate nut tightened down against the upper end of the connecting finger. The nut is retained against rotation by a tubular locking cup which is formed on the threaded outer end portion of the control rod's upper end plug and extends axially therefrom, the locking cup being deformed radially outward, at its upper end, into locking engagement with a groove in the nut. This prior arrangement has a considerable drawback insofar as in order for a control rod to be removed from the spider assembly, it is necessary to cut off the whole threaded portion of its end plug, including the nut thereon, and then to replace both the control rod and the fastening nut.

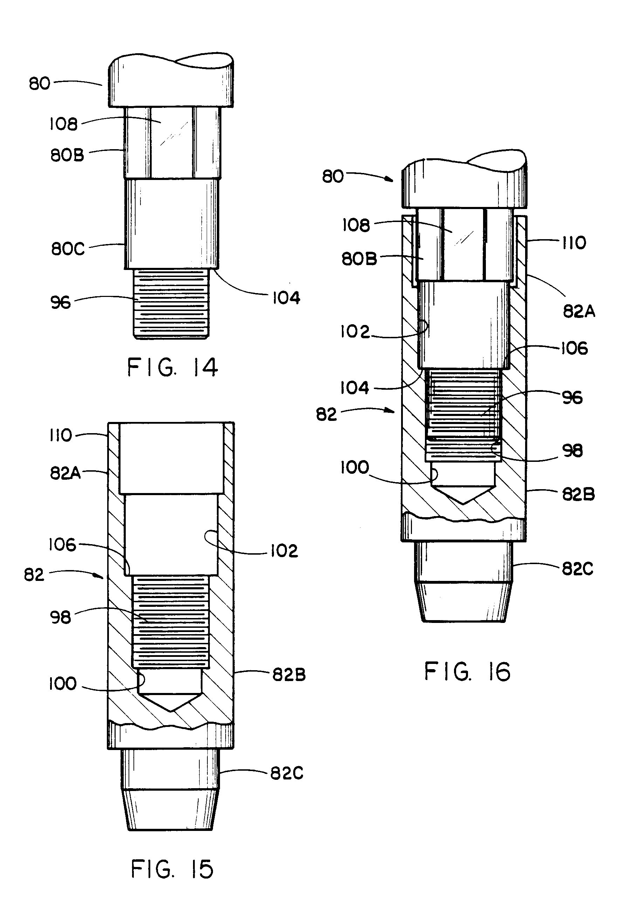

Turning now to Figs. 10-16, there is illustrated a control-rod attachment joint embodying the invention. In Fig. 10, this attachment joint, generally designated 74, is shown as provided between a control rod 72 and a reconstitutable control-rod spider assembly generally designated 68. The control-rod spider assembly 68 itself is similar to the conventional one illustrated in Figs. 2 and 3 in that it comprises a spider structure 70 (shown only fragmentarily) similar to the spider structure 36, and a plurality of control rods 72 (only one is partially shown) supported from the spider structure 70 and each of which, except for its upper end plug, is similar to the control rods 34 previously described herein in connection with the conventional spider assembly 32 of Figs. 2-3. Each of the control rods of the reconstitutable spider assembly 68 is removably attached to the spider structure 70 by means of an attachment joint 74 embodying the invention, as will now be described.

Each attachment joint 74 comprises an elongate, detachable, split or two-part upper end plug 78 on the respective control rod 72, which end plug 78 comprises two separate upper and lower plug portions 80, 82. The upper plug portion 80 has upper, middle and lower sections 80A, 80B, 80C integrally connected in tandem to each other, and the lower plug portion 82 has upper, middle and lower segments 82A, 82B, 82C integrally connected in tandem to each other.

The connecting finger 76 on the spider structure is similar to the one shown in Figure 4 in that it has an axial bore 84 extending into a lower portion 76A of the finger 76 from the open lower end 86 thereof, and an internally threaded hole 88 at the upper end of the bore 84. The upper section 80A of the upper plug portion 80 has external threads 90 allowing it to be firmly screwed into the threaded hole 88 of the connecting finger; and the lower segment 82C of the lower plug portion 82 has a diameter sufficiently smaller than the open upper end 92 of the cladding tube 94 of the control rod 72 to allow it to be inserted and rigidly affixed therein. To this extent, the upper end plug 78 is similar to the upper end plug 40 of the attachment joint 50 of Figure 8, but in all other respects it differs therefrom.

More particularly, in the attachment joint 74 embodying the invention, the lower section 80C of the upper plug portion 80 and the middle segment 82B of the lower plug portion 82 have complementarily threaded means 96, 98 for threadedly connecting the upper and lower plug portions 80, 82 of the split upper end plug 78 rigidly to one another. Preferably, the threaded means 96 on the lower section 80C of the upper plug portion 80 is in the form of external male threads 96, and the threaded means 98 on the middle segment 82B of the lower plug portion 82 is in the form of internal female threads defined in a recess 100 at the lower or inner end of a central opening 102 extending axially through the upper segment 82A and substantially through middle segments 82B of the lower plug portion 82. The external threads 96 of the upper plug portion 80 are threadedly engaged with the internal threads 98 of the lower plug portion 82 when the two plug portions 80, 82 are connected together.

The lower section 80C of the upper plug portion 80 has two different diameters, namely, a smaller one directly adjacent its lower end which has the external threads 96 formed thereon, and a somewhat larger one directly thereabove, the two diameters, at their junction, defining an annular shoulder 104 which faces toward the lower plug portion 82 and is located just above the external threads 96. The part of the central opening 102 which is located in the middle segment 82B of the lower plug portion 82 is larger in diameter than the internally threaded recess 100 thereof so as to define, directly above the recess 100, an annular ledge 106 facing toward the upper plug portion 80 so that the shoulder 104 on the upper plug portion 80 will bottom out in a preloaded condition upon the ledge 106 within the lower plug portion 82 when the two plug portions are threadedly connected together.

The middle section 80B of the upper plug portion 80 and the upper segment 82A of the lower plug portion 82 have thereon retaining means in the form of complementary interlocking means 108, 110, for locking the threadedly connected upper and lower plug portions 80, 82 together so as to resist unthreading thereof from one another during normal reactor operation. In the attachment joint 74, the complementary interlocking means 108 on the upper plug portion 80 consist of a plurality of flat surfaces 108 formed on the exterior of the middle section 80B at locations circumferentially spaced from one another thereabout. Preferably there are four flat surfaces 108 circumferentially displaced about ninety degrees from one another. The complementary interlocking means 110 on the lower plug portion 82 is a hollow sleeve 110 defined by the upper segment 82A and fitted over and about the flat surfaces 108, the sleeve being deformed, e.g., crimped into gripping engagement with the flats, to resist unthreading of the upper and lower plug portions 80, 82 from one another. However, the retaining means is defeatable in that the sleeve 110 is thin-walled enough to resume a generally cylindrical configuration upon application of a predetermined torque to the control rod 72 causing the latter to rotate and thereby to unthread the lower plug portion 80 of its split upper end plug 78 from the upper plug portion 82. As seen from Figures 10, 15 and 16, the upper segment 82A of the lower plug portion 82 defining the sleeve 110 has a much thinner wall than the middle segment 82B thereof.

To summarize, the reconstitutable control rod spider assembly 68 illustrated in Figures 10-16 includes a plurality of removable control rods 72 each having a split upper end plug 78 by means of which it is detachably attached to a connecting finger 76 of the spider structure 70. Each split upper end plug 78 is composed of two separate upper and lower plug portions 80, 82 which are screwed together and torqued to provide a joint preload, and it includes complementary interlocking means formed by the flats 108 and the crimped sleeve 110 which prevent loosening of the threadedly engaged plug portions 80, 82 during reactor operation. Locking is accomplished by swaging or crimping the thin-walled sleeve 110 on the lower plug portion 82 onto the flats 108 of the upper plug portion 80.

Removal of a control rod 72 is accomplished by applying thereto sufficient torque to overcome the crimp lock provided by the deformed sleeve 110, and to cause the lower plug portion 82, which is affixed to the control-rod cladding tube 94, to come unscrewed from the upper plug portion 80 which is affixed to the spider-vane connecting finger 76. After the control rod has thus been removed, it can be replaced with a new control rod having affixed to its cladding tube 94 a lower plug portion corresponding to plug portion 82, and which lower plug portion simply is screwed onto the original upper plug portion 80 still affixed to the connecting finger 76, whereupon the thin-walled sleeve 110 of the lower plug portion 82 is crimped onto the flats 108 of the upper plug portion 80. It is noted that the lower plug portion 82 on the replacement rod originally comes with the crimpable thin-walled sleeve 110 thereon still in its virgin or nondeformed state. It is further to be noted that the detachable attachment features incorporated in the separate upper and lower plug portions 80, 82 of the split upper end plug 78 do not adversely affect any other desirable features, such as the flexure joint 112 (Figure 10) on the upper plug portion 80, and the clearance gap 114 between the flexure joint 112 and the lower end 86 of the finger 76, which are conventional and preferably are retained in the split upper end plug 78 of the invention.

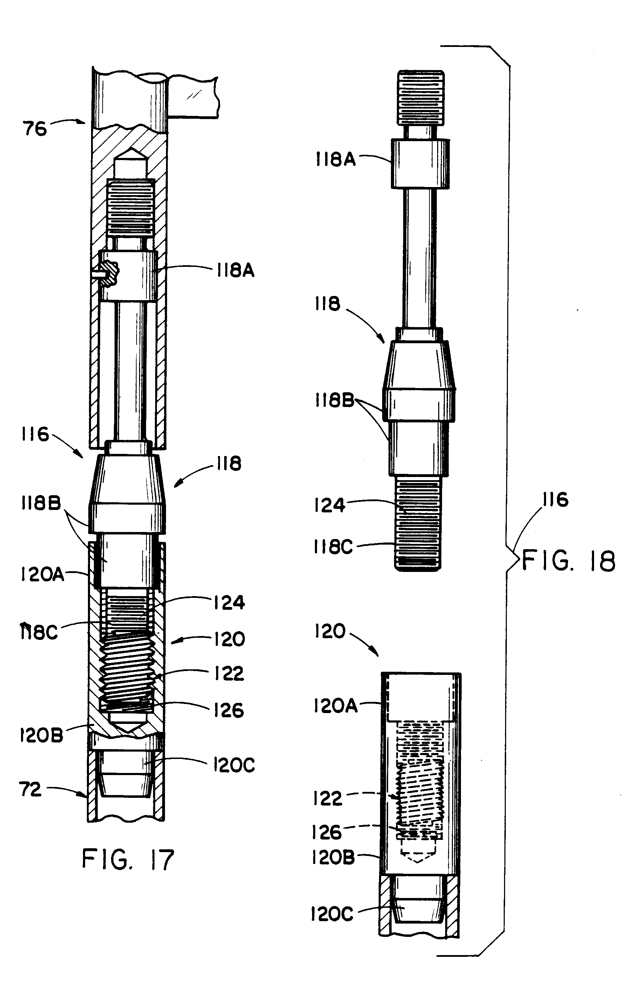

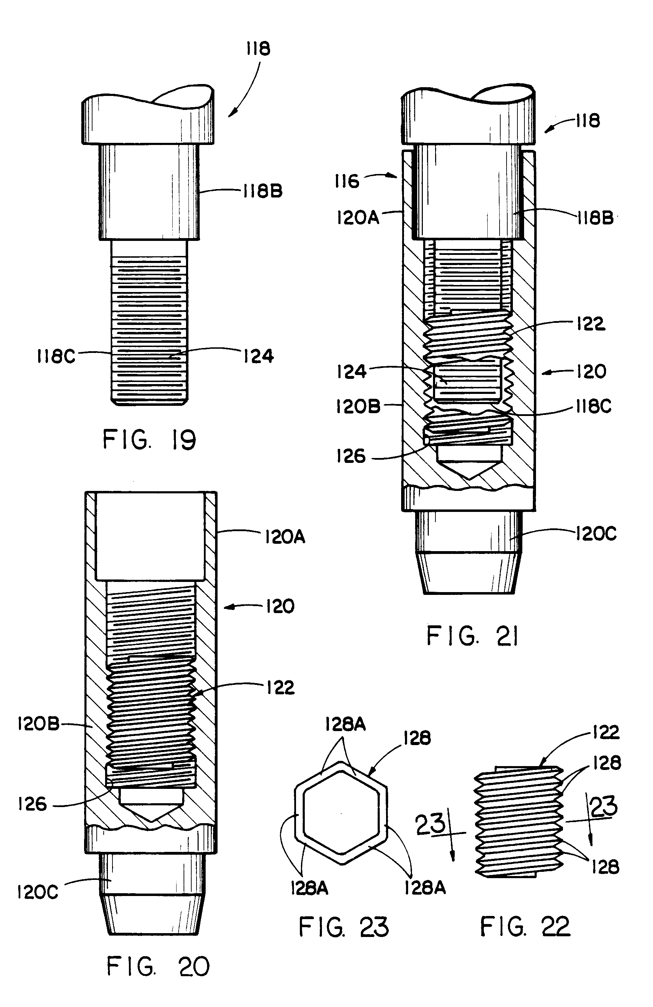

Referring now to Figures 17-21, there is illustrated a modified split upper end plug 116 having upper and lower plug portions 118, 120 and employing a locking feature which is different from the crimp retainer-type locking feature described above. The modified split upper end plug 116 is identical to the previously described split upper end plug 78 except for its defeatable retaining means.

First, instead of the crimpable thin-walled sleeve 110 on the upper segment 82A of the lower plug portion 82 and the flats-bearing middle section 80B of the upper plug portion 80, the interlocking means of the modified end plug 116 include a thicker-walled cylindrical upper segment 120A on the lower plug portion 120 and a cylindrical nonflats-bearing middle section 118B on the upper plug portion 118, the cylindrical middle section 118B and cylindrical upper segment 120A of, respectively, the upper and lower plug portions 118, 120 thus forming a slip-fit type joint where the crimp-type locking feature exists in the previously described embodiment.

Second, the threaded lower section 118C of the upper plug portion 118 and threaded middle segment 120B of the lower plug portion 120 of the modified split upper end plug 116 are longer than the corresponding threaded lower section 80C and middle segment 82B of the respective upper and lower portions 80, 82 of the split upper end plug 78.

Finally, the modified end plug 116 employs as a locking member 122 a radially flexible and expandable thread-defining coil deployed between the threaded lower section 118C and the middle segment 120B of the upper and lower end-plug portions 118, 120, respectively. The coil 122 threadably fits between, and at its inner and outer peripheries makes threaded frictional engagement with, external male threads and internal female threads 124, 126 on the upper plug portion's lower section 118C and the lower plug portion's middle segment 120B, respectively. Thus, once the upper and lower plug portions 118, 120 have been connected together, the coil 122 will frictionally resist relative rotation thereof with respect to one another. However, the coil will make it possible for the control rod to be rotated by overcoming the frictional resistance offered by the coil.

More specifically, and with particular reference to Figures 21-23, the radially flexible and expandable thread-defining coil 122 is a screw-thread coil insert which, per se, is a commercial product marketed under the tradename HeliCoil. The locking or retaining action of this coil 122 is achieved by one or more of its windings 128 having a series of straight segments or "chords" 128A. When the threaded lower section 118C of the upper plug portion 118 enters the coil 122, the chordal segments 128A of the latter flex outward, thereby creating pressure on the threaded section 118C and providing frictional resistance to rotation of the lower plug portion 120 relative to the upper plug portion 118.

## Claims

1. A reconstitutable control assembly (68) for use with a nuclear fuel assembly, including a spider structure (70), at least one control rod (72), and an attachment joint (74) detachably fastening the control rod to a connecting portion (76) of the spider structure, characterized in that said attachment joint (74) comprises an elongated control-rod end plug (78, 116) comprising two separate plug portions (80, 82; 118, 120) one (80, 118) of which is firmly affixed to said connecting portion (76) of the support structure, and the other (82, 120) of which is firmly affixed to the control rod (72), said separate plug portions being separably joined to each other and including retaining means (108, 110; 122) for resisting relative separating movement of the two plug portions with respect to one another, said retaining means being defeatable through application, to the control rod or said other plug portion (82, 120) affixed thereto, of a force sufficient to overcome the resistance of said retaining means (108, 110; 122).

2. A control assembly according to claim 1, characterized in that said one plug portion (80, 118) has an upper section (80A, 118A) thereof inserted and threadedly engaged in a bore (84) formed in said connecting portion (76) of the spider structure (70), said upper section being non-rotatably locked to said connecting portion.

3. A control assembly according to claim 1 or 2, characterized in that said other plug portion (82, 120) has a lower segment (82C, 120C) thereof mated with and rigidly attached to a hollow upper end portion (92) of said control rod (72).

4. A control assembly according to claim 1, 2 or 3, characterized in that the two plug portions (80, 82; 118, 120) are screwed together.

5. A control assembly according to claim 4, characterized in that said one plug portion (80, 118) has a longer section (80C, 118C) with external threads (96, 124) formed thereon, and said other plug portion (82, 120) has a middle segments (82B, 120B) with internal threads (98, 126) formed therein, said lower section (80C, 118C) of said one plug portion (80, 118) extending into and being threadedly engaged in said middle segment (82B, 120B) of said other plug portion (82, 120).

6. A control assembly according to claim 5, characterized in that said one plug portion (80, 118) has formed exteriorly thereon an annular shoulder (104), and said other plug portion (82, 120) has formed interiorly therein an annular ledge (106), said annular shoulder and said annular ledge being bottomed out upon each other in preloaded relation when the two plug portions (80, 82; 118, 120) are completely joined.

7. A control assembly according to claim 5 or 6, characterized in that said retaining means (108, 110) comprises complementary interlocking means formed on the respective plug portions (80, 82) and coacting with each other to resist relative unthreading rotation of the plug portions with respect to one another.

8. A control assembly according to claim 7, characterized in that said complementary interlocking means (108, 110) comprises a plurality of flats (108) formed exteriorly, and at circumferentially spaced locations, on a middle section (80B) of said one plug portion (80), and a hollow sleeve (110) defined on an upper segment (82A) of said other plug portion (82) and fitted over said flats (108), said hollow sleeve (110) being deformed into gripping engagement with said flats (108) and being adapted to yield and thereby permit unthreading rotation of said other plug portion (82) when a predetermined unthreading torque is applied to the control rod (72) or to said other plug portion (82) affixed thereto.

9. A control assembly according to claim 8, characterized in that said hollow sleeve (110) has a smaller wall thickness than said middle segment (82B).

10. A control assembly according to claim 8 or 9, characterized in that said flats (108) are circumferentially displaced from each other by about ninety degrees.

11. A control assembly according to claim 5 or 6, characterized in that said retaining means comprises a radially flexible and expandable thread-defining means (122) interposed between said external and internal threads (124, 126) and in threaded frictional engagement therewith so as to frictionally resist relative unthreading rotation of the two plug portions (118, 120) with respect to one another.

12. A control assembly according to claim 11, characterized in that said radially flexible and expandable thread-defining means (122) is a screw-thread coil insert.

13. A control assembly according to claim 11 or 12, characterized in that said one plug portion (118) has a middle section (118B) thereof, and said other plug portion (120) has an upper segment (120A) thereof, complementarily shaped so as together to define a slip-fit joint between the two plug portions (118, 120).

14. A control assembly according to claim 13, characterized in that said middle section (118B) has a cylindrical outer surface, and said upper segment (120A) defines a cylindrical sleeve fitting axially over said cylindrical surface and, together therewith, forming said slip-fit joint.

## Patentansprüche

1. Wiederzusammenbaubare Steuerstabbaugruppe (68) zur Verwendung in einem Kernbrennelement, mit einer Tragarmkonstruktion (70), mindestens einem Steuerstab (72) und einer Befestigungsverbindung (74) zum lösbaren Befestigen des Steuerstabs an einem Verbindungsteil (76) der Tragarmkonstruktion, dadurch gekennzeichnet, daß die Befestigungsverbindung (74) einen länglichen Steuerstabendstopfen (78, 116) mit zwei gesonderten Stopfenteilen (80, 82; 118, 120) aufweist, von denen das eine (80, 118) fest an den Verbindungsteil (76) der Tragarmkonstruktion befestigt ist, und von denen das andere (82, 120) fest am Steuerstab (72) befestigt ist, daß weiter die gesonderten Stopfenteile lösbar miteinander verbunden sind und Sperrmittel (108, 110; 122) aufweisen, um einer relativen Trennbewegung der beiden Stopfenteile mit Bezug zueinander Widerstand entgegenzusetzen, und daß die Sperrmittel durch Anwendung einer zur Überwindung des Widerstands dieser Sperrmittel (108, 110; 122) ausreichenden Kraft auf den Steuerstab oder das daran befestigte andere Stopfenteil (82, 120) überwindbar sind.

2. Steuerstabbaugruppe nach Anspruch 1, dadurch gekennzeichnet, daß das eine Stopfenteil (80, 118) einen oberen Abschnitt (80A, 118A) aufweist, der in eine in den Verbindungsteil (76) der Tragarmkonstruktion (70) gebildete Bohrung eingeschraubt ist, wobei dieser obere Abschnitt drehfest mit dem Verbindungsteil verriegelt ist.

3. Steuerstabbaugruppe nach Anspruch 1 oder 2, dadurch gekennzeichnet, daß das genannte andere Stopfenteil (82, 120) einen unteren Abschnitt (82C, 120C) aufweist, der an einen hohlen oberen Endteil (92) des Steuerstabs (72) angepaßt und daran starr befestigt ist.

4. Steuerstabbaugruppe nach Anspruch 1, 2 oder 3, dadurch gekennzeichnet, daß die beiden Stopfenteile (80, 82; 118, 120) miteinander verschraubt sind.

5. Steuerstabbaugruppe nach Anspruch 4, dadurch gekennzeichnet, daß das genannte eine Stopfenteil (80, 118) einen unteren Abschnitt (80C, 118C) mit daran gebildetem Außengewinde (96, 124) aufweist und das andere Stopfenteil (82, 120) einen Mittelabschnitt (82B, 120B) mit darin gebildetem Innengewinde (98, 126) aufweist, wobei der untere Abschnitt (80C, 118C) des einen Stopfenteils (80, 118) in den Mittelabschnitt (82B, 120B) des anderen Stopfenteils (82, 120) hineinragt und in diesen eingeschraubt ist.

6. Steuerstabbaugruppe nach Anspruch 5, dadurch gekennzeichnet, daß das eine Stopfenteil (80, 118) eine außen angeformte Ringschulter (104) aufweist und das andere Stopfenteil (82, 120) einen innen angeformten Ringsims (106) aufweist, wobei die Ringschulter und der Ringsims bei vollständigem Verbinden der beiden Stopfenteile (80, 82; 118, 120) miteinander in vorgespanntem Zustand aneinander anliegen.

7. Steuerstabbaugruppe nach Anspruch 5 oder 6, dadurch gekennzeichnet, daß die Sperrmittel (108, 110) komplementär ineinandergreifende Mittel aufweisen, die an den betreffenden Stopfendteilen (80, 82) gebildet sind und miteinander zusammenwirken, um einer relativen Ausschraubdrehbewegung der Stopfenteile mit Bezug zueinander entgegenzuwirken.

8. Steuerstabbaugruppe nach Anspruch 7, dadurch gekennzeichnet, daß die komplementär ineinandergreifenden Mittel (108, 110) eine Vielzahl von außen und an umfangsmäßig mit Abständen angeordneten Stellen gebildete Flachflächen (108) an einem Mittelbereich (80B) des einen Stopfenteils (80) und eine an einem oberen Abschnitt (82A) des anderen Stopfenteils (82) gebildete und über die Flachflächen (108) greifende Hohlmuffe (110) aufweisen, wobei die Hohlmuffe (110) in Eingriffanlage mit den Flachflächen (108) deformiert und so ausgelegt ist, daß sie nachgeben und eine Ausschraubdrehung des anderen Stopfenteils (82) dadurch zulassen kann, wenn ein vorgegebenes Ausschraubdrehmoment auf den Steuerstab (72) oder das daran befestigte andere Stopfenteil (82) ausgeübt wird.

9. Steuerstabbaugruppe nach Anspruch 8, dadurch gekennzeichnet, daß die Hohlmuffe (110) eine kleinere Wanddicke als der Mittelabschnitt (82B) aufweist.

10. Steuerstabbaugruppe nach Anspruch 8 oder 9, dadurch gekennzeichnet, daß die Flachflächen (108) jeweils um etwa 90° umfangsmäßig voneinander versetzt sind.

11. Steuerstabbaugruppe nach Anspruch 5 oder 6, dadurch gekennzeichnet, daß die Sperrmittel ein radial flexibles und dehnbares Gewindeelement (122) aufweisen, das zwischen dem Außengewinde und dem Innengewinde (124, 126) eingelegt und damit in reibschlüssigem Gewindeeingriff steht, um so durch Reibung einer relativen Aufschraubdrehung der beiden Stopfenteile (118, 120) mit Bezug zueinander entgegenzuwirken.

12. Steuerstabbaugruppe nach Anspruch 11, dadurch gekennzeichnet, daß das radial flexible und dehnbare Gewindeelement (122) ein Schraubenwendeleinsatz ist.

13. Steuerstabbaugruppe nach Anspruch 11 oder 12, dadurch gekennzeichnet, daß das eine Stopfenteil (118) einen Mittelabschnitt (118B) und das andere Stopfenteil (120) einen oberen Abschnitt (120A) aufweist, die so komplementär zueinander gestaltet sind, daß sie eine Schiebesitzverbindung zwischen den beiden Stopfenteilen (118, 120) bilden.

14. Steuerstabbaugruppe nach Anspruch 13, dadurch gekennzeichnet, daß der Mittelabschnitt (118B) eine zylindrische Außenfläche aufweist und der obere Abschnitt (120A) eine Zylinderhülse bildet, die axial auf die Zylinderfläche aufgeschoben ist und die zusammen die Schiebesitzverbindung bilden.

## Revendications

1. Grappe de commande (68) reconstituable à utiliser dans un assemblage de combustible nucléaire, comprenant une structure d'araignée (70), au moins une barre de commande (72) et un joint de fixation (74) fixant de façon amovible la barre de commande à une partie de liaison (76) de la structure d'araignée, caractérisée en ce que ledit joint de fixation (74) comprend un bouchon (78, 116) allongé d'extrémité de la barre de commande, composé de deux parties de bouchon séparées (80, 82 ; 118, 120) dont l'une (80, 118) est fermement fixée à la partie de liaison (76) de la structure support et l'autre (82, 120) est fermement fixée à la barre de commande (72), lesdites parties de bouchon séparées étant réunies l'une à l'autre de façon séparable et incluant des moyens de retenue (108, 110; 122) pour résister au mouvement relatif de séparation des deux parties de bouchon l'une par rapport à l'autre, lesdits moyens de retenue pouvant être annihilés par l'application, sur la barre de commande ou sur ladite autre partie de bouchon (82, 120) qui est fixée à celle-ci, d'une force suffisante pour vaincre la résistance desdits moyens de retenue (108, 110; 122).

2. Grappe de commande selon la revendication 1, caractérisée en ce que ladite première partie de bouchon (80, 118) a son tronçon supérieur (80A, 118A) introduit et vissé dans un alésage (84) formé dans ladite partie de liaison (76) de la structure d'araignée (70), ledit tronçon supérieur étant verrouillé à ladite partie de liaison sans pouvoir tourner.

3. Grappe de commande selon la revendication 1 ou 2, caractérisée en ce que ladite autre partie de bouchon (82, 120) a son segment inférieur (82C, 120C) apparié à la partie d'extrémité supérieure (92) creuse de ladite barre de commande (72), en lui étant fixée rigidement.

4. Grappe de commande selon la revendication 1, 2 ou 3, caractérisée en ce que les deux parties de bouchon (80, 82; 118, 120) sont vissées ensemble.

5. Grappe de commande selon la revendication 4, caractérisée en ce que ladite première partie de bouchon (80, 118) a un tronçon inférieur (80C, 118C) sur lequel sont formés des filets extérieurs (96, 124), et ladite autre partie de bouchon (82, 120) a un segment intermédiaire (82B, 120B) dans lequel sont formés des filets intérieurs (98, 126), ledit tronçon inférieur (80C, 118C) de ladite première partie de bouchon (80, 118) s'étendant dans ledit segment intermédiaire (82B, 120B) de ladite autre partie de bouchon (82, 120) en lui étant vissé.

6. Grappe de commande selon la revendication 5, caractérisée en ce que ladite première partie de bouchon (80, 118) comporte, sur son extérieur, un épaulement annulaire (104) et ladite autre partie de bouchon (82, 120) comporte, en son intérieur, un rebord annulaire (106), ledit épaulement annulaire et ledit rebord annulaire étant appuyés l'un sur l'autre, de façon préchargée, lorsque les deux parties de bouchon (80, 82; 118, 120) sont totalement réunies.

7. Grappe de commande selon la revendication 5 ou 6, caractérisée en ce que lesdits moyens de retenue (108, 110) comprennent des moyens complémentaires d'interverrouillage formés sur les parties de bouchon respectives (80, 82) et agissant conjointement pour résister à la rotation relative de dévissage des parties de bouchon l'une par rapport à l'autre.

8. Grappe de commande selon la revendication 7, caractérisée en ce que lesdits moyens complémentaires d'interverrouillage (108, 110) comprennent une pluralité de méplats (108) formés extérieurement, et en des emplacements répartis sur la circonférence, sur le tronçon intermédiaire (80B) de ladite première partie de bouchon (80), ainsi qu'un manchon creux (110) défini sur un segment supérieur (82A) de ladite autre partie de bouchon (82) et emboîté sur lesdits méplats (108), ledit manchon creux (110) étant déformé pour s'accrocher sur lesdits méplats (108) et étant apte à pousser ladite autre partie de bouchon (82), et de ce fait en permettre la rotation de dévissage, lorsqu'un couple prédéterminé de dévissage est appliqué à la barre de commande (72) ou à ladite autre partie de bouchon (82) fixée à celle-ci.

9. Grappe de commande selon la revendication 8, caractérisée en ce que ledit manchon creux (110) a une épaisseur de paroi inférieure à celle dudit segment intermédiaire (82B).

10. Grappe de commande selon la revendication 8 ou 9, caractérisée en ce que lesdits méplats (108) sont répartis à la circonférence en étant espacés les uns des autres d'environ 90°.

11. Grappe de commande selon la revendication 5 ou 6, caractérisée en ce que lesdits moyens de retenue comprennent un moyen (122) radialement souple et dilatable de définition des filets, intercalé entre lesdits filets extérieur et intérieur (124, 126) et en contact frottant vissé avec eux de façon à résister par frottement à la rotation de dévissage des deux parties de bouchon (118, 120) l'une par rapport à l'autre.

12. Grappe de commande selon la revendication 11, caractérisée en ce que ledit moyen (122) radialement souple et dilatable de définition des filets est un insert de bobine à pas de vis.

13. Grappe de commande selon la revendication 11 ou 12, caractérisée en ce que ladite première partie de bouchon (118) a un tronçon intermédiaire (118B) et ladite autre partie de bouchon (120) a un segment supérieur (120A) qui ont des formes complémentaires pour définir ensemble un joint d'ajustage doux entre les deux parties de bouchon (118, 120).

14. Grappe de commande selon la revendication 13, caractérisée en ce que ledit tronçon intermédiaire (118B) a une surface extérieure cylindrique et ledit segment supérieur (120A) définit un manchon cylindrique s'emboîtant axialement sur ladite surface cylindrique et formant, avec elle, ledit joint d'ajustage doux.
